# EUROPÄISCHE PATENTSCHRIFT

(11) **EP 1 858 744 B1**
(45) Veröffentlichungstag und Bekanntmachung des Hinweises auf die Patenterteilung: **21.01.2009**
(21) Anmeldenummer: 06708441.8
(22) Anmeldetag: 22.02.2006
(51) Int. Cl.: B62D 15/02, B62D 1/28

(54) **PARKHILFSVORRICHTUNG UND VERFAHREN ZUR PARKUNTERSTÜTZUNG**
PARKING AUXILIARY DEVICE AND A PARKING ASSISTING METHOD
DISPOSITIF AUXILIAIRE DE STATIONNEMENT ET PROCEDE D'ASSISTANCE AU STATIONNEMENT

(30) Priorität: 03.03.2005 DE 102005009703
(43) Veröffentlichungstag der Anmeldung: 28.11.2007
(73) Patentinhaber: ROBERT BOSCH GMBH, 70442 Stuttgart (DE)
(72) Erfinder: FIESS, Reinhold, 77770 Durbach (DE); GUENTHER, Clemens, 76275 Ettlingen (DE); WITTIG, Thomas, 71139 Ehningen (DE); KORNBLUM, Christian, 75038 Oberderdingen (DE)
(86) Internationale Anmeldenummer: PCT/EP2006/060167
(87) Internationale Veröffentlichungsnummer: WO 2006/092370

(56) Entgegenhaltungen:
- EP-A- 1 447 271
- EP-A- 1 484 234
- DE-A1- 10 117 650

## Beschreibung

### Stand der Technik

Die Erfindung geht aus von einer Parkhilfsvorrichtung und einem Verfahren zur Parkunterstützung nach der Gattung des Hauptanspruchs. Es sind schon Einparksysteme bekannt, die einen Fahrer bei einem Einparken eines Fahrzeugs in eine Parklücke unterstützen. Diese Einparksysteme messen den Abstand zu Hindernissen in der Umgebung des Fahrzeugs. Für die Messung werden insbesondere Ultraschallsensoren eingesetzt. Nähert sich das Fahrzeug einem Hindernis zu sehr an, so wird eine optische und/oder akustische Warnung an den Fahrer ausgegeben. Der Fahrer wird somit vor einem Zusammenstoß mit Hindernissen gewarnt, um Beschädigungen am Fahrzeug zu vermeiden. Ferner sind auch Einparksysteme bekannt, bei denen die Parklücke vermessen wird und insbesondere auch eine Einparktrajektorie in die Parklücke berechnet wird. Ferner ist es auch bekannt, den Fahrer bei dem Einparken durch Lenkhinweise bzw. durch eine automatische Lenkung zu unterstützen.

Aus der DE 201 02 950 U1 ist ferner eine Fernbedienung bekannt, mit der der Fahrer das Fahrzeug von außerhalb des Fahrzeugs steuern kann. Indem sich der Fahrer außerhalb des Fahrzeugs befindet, kann er die Abstände zu Hindernissen im Vergleich zu einer Beobachtungsposition in dem Fahrzeug besser einschätzen.

Aus der DE 101 17 650 ist eine Parkhilfsvorrichtung für ein Fahrzeug mit einer Ansteuereinheit für eine Fahrzeuglenkung bekannt. Bei dieser Parkhilfsvorrichtung wird eine Sdl-Trajektone errechnet, die den Ein-bzw Ausparken des Fahrzeuges dient.

### Vorteile der Erfindung

Die erfindungsgemäße Parkhilfsvorrichtung und das erfindungsgemäße Verfahren zur Parkunterstützung mit den Merkmalen der nebengeordneten Ansprüche haben demgegenüber den Vorteil, dass das Fahrzeug automatisch auf einem bereits befahrenen Weg und damit ohne Kollisionsrisiko automatisch gelenkt wird. Damit wird sowohl ein Einparken, aber auch ein Ausparken erleichtert. Indem die zuvor befahrene Strecke abgerufen wird, ist ein Fahrer von der Aufgabe befreit, diese bereits befahrene Strecke erneut sorgfältig zu lenken. Insbesondere wird es hier bei dem Fahrer ermöglicht, sich während des automatischen Lenkvorgangs nicht im Fahrzeug aufzuhalten. Dies ist vor allem dann vorteilhaft, wenn das Fahrzeug in eine Parklücke eingeparkt oder aus dieser ausgeparkt werden soll, die keinen geeigneten Platz zum Einsteigen bzw. Aussteigen von Passagieren des Fahrzeugs lässt. Der Fahrer kann nun zunächst das Fahrzeug an einer gewünschten Position in der Parklücke positionieren, aus der Parklücke herausfahren und das Fahrzeug anschließend verlassen. Nun wird das Fahrzeug automatisch entlang der gerade befahrenen Wegstrecke zurück auf die gewünschte Parkposition geführt. Auf der somit gespeicherten Fahrstrecke kann das Fahrzeug im Weiteren nach Belieben geführt werden. Damit kann der Fahrer das Fahrzeug aus der Parklücke vor einem erneuten Einsteigen entlang der gespeicherten Wegstrecke herausbeordern, so dass er bequem in das Fahrzeug einsteigen kann. Damit wird es ermöglicht, dass ein Fahrzeug auch diejenigen Parklücken nutzen kann, die ansonsten ein komfortables Einsteigen, Aussteigen oder gegebenenfalls auch Beladen oder Entladen mit geöffneten Fahrzeugtüren nicht ermöglichen würde. Ferner können Beschädigungen des eigenen oder eines benachbarten Fahrzeugs in der Parklücke bei einem Öffnen der Fahrzeugtüren vermieden werden, da ein Einsteigen bzw. Aussteigen in einen Bereich vor der Parklücke verlagert werden kann. Hierbei ist es unbeachtlich, ob die Parklücke senkrecht oder parallel zu einem Straßenverlauf angeordnet ist. Unabhängig von der tatsächlichen Breite oder Länge einer zur Verfügung stehenden Parklücke kann in das Fahrzeug mit weit geöffneten Fahrzeugtüren eingestiegen oder aus diesem ausgestiegen werden. Insbesondere ist dies für Fahrer mit einer eingeschränkten Bewegungsmöglichkeit, für Kinder oder für Personen mit Kleinkindern von Vorteil. So kann z. B. ein Kind bequem in seinem Sitz befestigt werden.

Die obengenanntenProbleme werden durch die Merkmale des unabhängigen Vorrichtungsanspruchs 1 bzw. des unabhängigen Verfahrensanspruches 6 gelöst.

Durch die in den Unteransprüchen aufgeführten Maßnahmen sind vorteilhafte Weiterbildungen und Verbesserungen der in den nebengeordneten Ansprüchen angegebenen Parkhilfsvorrichtung und des angegebenen Verfahrens zur Parkunterstützung möglich. Besonders vorteilhaft ist es, eine insbesondere drahtlose Fernbedienung vorzusehen, mit der ein Zurückfahren des Fahrzeugs entlang des gespeicherten Weges gesteuert werden kann. Während die Lenkung automatisch erfolgt kann der Fahrer somit das Fahrzeug nach Belieben beschleunigen und abbremsen. Hierdurch kann der Fahrer z.B. einen Zusammenstoß mit Fußgängern vermeiden, die sich in den Fahrweg bewegt haben. Da der Fahrer die Kontrolle über die Bewegung des Fahrzeugs behält, ist eine automatische, vollständige Fahrüberwachung nicht erforderlich, da lediglich die Lenkung automatisch durchgeführt wird.

Es ist ferner vorteilhaft, das Fahrzeug nach Erreichen des Endpunktes der gespeicherten Strecke wieder zu dem Anfangspunkt zurückzuführen. So ist es z.B. möglich, das Fahrzeug nach einem Einparkvorgang auch mit einer erfindungsgemäßen Unterstützung wieder auszuparken. Ferner ist es vorteilhaft, den Einfahrvorgang in eine Parklücke aufzuzeichnen, anschließend das Fahrzeug mit Unterstützung auf dem Einparkweg aus der Parklücke wieder zurückzubeordern, um es anschließend wieder auf die gewünschte Parkposition mit Unterstützung einparken zu lassen.

Ferner ist es vorteilhaft, während der automatischen Führung des Fahrzeugs die Fahrzeuggeschwindigkeit zu begrenzen. Hierdurch können gefährliche Situationen vermieden werden, da bei einer niedrigen Fahrzeuggeschwindigkeit sowohl bei einer automatischen Steuerung, als auch bei einer Steuerung durch den Fahrer genügend Zeit für eine Reaktion verbleibt.

Ferner ist es vorteilhaft, eine Abstandsmessvornchtung vorzusehen, die vor einer Kollision mit Hindernissen warnt. Gegebenenfalls kann das Fahrzeug auch automatisch angehalten werden, um eine Kollision zu vermeiden. Die Abstandsmessvorrichtung kann auch bereits bei einem manuellen Einparken durch den Fahrer aktiviert werden. So kann z.B. dem Fahrer zunächst eine Trajektorie vorgegeben werden, die der Fahrer entlang fährt. Die gefahrene Strecke wird aufgezeichnet und steht ab diesem Zeitpunkt für eine automatische oder teilautomatische Fahrt mittels der erfindungsgemäßen Parkhilfsvorrichtung zur Verfügung.

### Zeichnung

Ausführungsbeispiele der Erfindung sind in der Zeichnung dargestellt und in der nachfolgenden Beschreibung näher erläutert. Es zeigen
Figur 1 eine schematische Darstellung eines Fahrzeug mit einer erfindungsgemäßen Parkhilfsvorrichtung,
Figuren 2 bis 5 ein Einparkverfahren zur Erläuterung des erfindungsgemäßen Verfahrens zur Parkunterstützung.

### Beschreibung des Ausführungsbeispiels

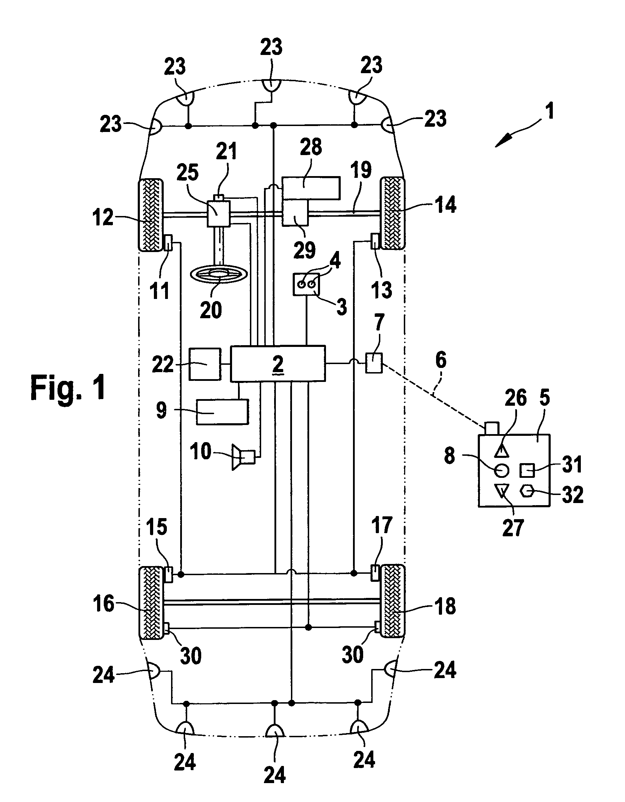

In der Figur 1 ist ein Kraftfahrzeug 1 dargestellt, das eine Steuereinheit 2 aufweist. Die Steuereinheit 2 dient zunächst dazu, eine von dem Fahrzeug befahrene Wegstrecke aufzuzeichnen. In einer ersten Ausführungsform wird die Aufzeichnung einer Wegstrecke über eine Bedieneinheit 3 aktiviert, die im Fahrzeug angeordnet ist und die Bedienelemente 4 aufweist. Die Bedienelemente 4 können z.B. als ein Lenkstockhebel oder als beliebige andere Bedienelemente, z.B. Tasten, im Fahrzeuginneren ausgeführt sein. In einer weiteren Ausführungsform kann die Aufzeichnung einer Wegstrecke auch über eine Fernbedienung 5 aktiviert werden. Die Fernbedienung 5 kann aus dem Fahrzeug entnommen werden, kann aber bevorzugt auch im Fahrzeuginnenraum genutzt werden. Die Fernbedienung 5 stellt eine Verbindung 6 zu einer Empfangseinheit 7 her, die mit der Steuereinheit 2 verbunden ist. Die Verbindung 6 kann drahtgebunden ausgeführt sein. In einer weiteren Ausführungsform kann die Verbindung 6 auch drahtlos ausgeführt sein. Eine drahtlose Verbindung ist in einer ersten Ausführung optisch ausgeführt. Ferner kann die drahtlose Verbindung auch über Funk erfolgen. Z.B. kann eine drahtlose Verbindung nach dem Blue-Tooth-Protokoll ausgeführt sein. Bevorzugt ist ein Funkprotokoll vorgesehen, das gegenüber einer Steuerung durch Dritte durch eine Kodierung geschützt ist. Die Fernbedienung 5 kann als ein gesondertes Bauteil im Fahrzeug ausgeführt sein, ist in einer bevorzugten Ausführungsform aber in einen elektronischen Schlüssel für das Fahrzeug, z.B. eine Codekarte, integriert. Eine Aufzeichnung der Wegstrecke kann z.B. über eine Drucktaste 8 auf der Fernbedienung 5 aufgerufen werden.

Der Benutzer erhält über eine optische Anzeigeeinheit 9 und/oder über eine akustische Ausgabeeinheit 10 eine Rückmeldung darüber, dass nunmehr eine Aufzeichnung der Fahrstrecke ausgehend von der aktuellen Position des Fahrzeugs beginnt. Bewegt der Fahrer nun das Fahrzeug, so werden von der Steuereinheit 2 Radsensoren ausgelesen, die bevorzugt an jedem Rad des Fahrzeugs angeordnet sind. Ein erster Radsensor 11 ist an dem linken Vorderrad 12 angeordnet, ein zweiter Radsensor 13 ist an dem rechten Vorderrad 14 angeordnet, ein dritter Radsensor 15 ist an dem linken Hinterrad 16 angeordnet und ein vierter Radsensor 17 ist an dem rechten Hinterrad 18 angeordnet Bei dem hier dargestellten Ausführungsbeispiel ist eine Vorderachse 19 des Fahrzeugs über ein Steuerrad 20 lenkbar. Ein aktuell eingestellter Lenkwinkel wird über einen Lenkwinkelsensor 21 ermittelt und an die Steuereinheit 2 übertragen.. Die Steuereinheit 2 dient somit als eine Erfassungseinheit für die Wegstrecke. Über die Wegstreckensensoren 11, 13, 15, 17 kann die von dem Fahrzeug zurückgelegte Wegstrecke ermittelt und zusammen mit dem aktuell eingeschlagenen Lenkwinkel in einem Speicher 22 abgelegt werden. Die Sensoren werden zyklisch abgefragt. Bevorzugt wird die Wegstrecke in äquidistanten Wegintervallen in dem Speicher 22 abgelegt.

Während der Fahrt werden in einer Ausführungsform Ultraschallsensoren 23 aktiviert, die bevorzugt an der Vorderseite des Fahrzeugs und an den Fahrzeugecken angeordnet sind. Bei einer Rückwärtsfahrt werden Ultraschallsensoren 24 aktiviert, die an der Rückseite des Fahrzeugs und an den hinteren Ecken angeordnet sind. Nähert sich das Fahrzeug einem Hindernis zu sehr an, so wird eine akustische und/oder optische Warnung über die Anzeigeeinheit 9 und/oder die akustische Ausgabeeinheit 10 an den Fahrer ausgegeben.

Hat das Fahrzeug 1 seine Zielposition erreicht, so hält der Fahrer das Fahrzeug an. In einer ersten Ausführungsform kann er durch eine Betätigung des Bedienelements 4 oder der Drucktaste 8 an der Fernbedienung 5 die Aufzeichnung beenden. In einer weiteren Ausführungsform wird die Aufzeichnung gegebenenfalls auch automatisch beendet, wenn das Fahrzeug länger als 15 Sekunden steht oder wenn der Motor abgeschaltet wird. Bevorzugt ist es vorgesehen, die Fahrstrecke bis zu einer Gesamtlänge von 5 Metern aufzuzeichnen. Eine entsprechende Fahrstrecke sollte im Allgemeinen für ein Hineinfahren in eine Parklücke bzw. für ein Herausfahren aus einer Parklücke ausreichend sein. Wird eine Länge einer maximal speicherbaren Fahrstrecke gegebenenfalls überschritten, so wird ebenfalls eine Warnung an den Fahrer optisch und/oder akustisch ausgegeben.

Nunmehr liegt also die aufgezeichnete Fahrstrecke von dem Anfangspunkt, bei dem die Aufzeichnung aktiviert wurde, zu dem Endpunkt vor, dem Anhaltepunkt, an dem die Aufzeichnung gestoppt wurde. Das Fahrzeug befindet sich zunächst ungeändert an dem Endpunkt der Fahrstrecke. Ausgehend von dieser Position kann es nun auf der aufgezeichneten Wegstrecke zurückbewegt werden. In einer ersten Ausführungsform wird dabei eine automatische Lenksteuereinheit 25 von der Steuereinheit 2 entsprechend der Bewegung des Fahrzeugs auf der Wegstrecke angesteuert. Dabei wird die zurückgelegte Wegstrecke jeweils wieder über die Wegstreckensensoren 11, 15, 13, 17 gemessen. In Abhängigkeit von der jeweils zurückgelegten Wegstrecke wird die Stellung der Vorderräder 12, 14 über die Lenksteuereinheit 25 entsprechend eingestellt. Die Aktivierung einer Zurückfahrt erfolgt dabei bevorzugt über die Fernbedienung 5. Über eine erste Pfeiltaste 26 kann das Fahrzeug nach vorne auf der Wegstrecke bewegt werden, über einen Druck auf eine zweite Pfeiltaste 27 kann das Fahrzeug zurückbewegt werden. Von der Steuereinheit 2 wird hierzu eine Antriebseinheit 28 des Fahrzeugs angesteuert, die über eine Getriebeeinheit 29 auf die Vorderachse 19 einwirkt und das Fahrzeug entsprechend bewegt. Gegebenenfalls kann über eine nicht dargestellte Kardanwelle stattdessen auch die Hinterachse angetrieben werden. In einer ersten Ausführungsform wird das Fahrzeug nur dann bewegt, wenn eine der Drucktasten 26, 27 gedrückt ist. Um eine kritische Situation zu vermeiden, ist die Fahrzeuggeschwindigkeit auf Schrittgeschwindigkeit, bevorzugt auf einen Betrag von 2 km/h begrenzt. In einer weiteren Ausführungsform kann eine Ansteuerung eines Antriebs auch durch eine separate, von der Steuereinheit 2 getrennte, über eine Datenverbindung mit der Steuereinheit 2 verbundene Ansteuerungseinheit ausgebildet sein.

Der Antrieb 28 des Fahrzeugs kann als ein herkömmlicher Verbrennungsmotor ausgeführt sein. Ferner kann der Antrieb 28 auch als ein Elektromotor ausgeführt sein, mit dem besonders einfach langsame Fahrzeuggeschwindigkeiten realisierbar sind. Bevorzugt ist das Getriebe 29 als ein automatisches Getriebe ausgeführt, das bei einer Aktivierung des Antriebs mittels der Fernbedienung 5 automatisch eine Kraftkopplung zwischen dem Antrieb 28 und der Antriebsachse herstellt, hier der Vorderachse 19. Die Fernbedienung 5 kann sowohl innerhalb des Fahrzeugs, bevorzugt aber auch außerhalb des Fahrzeugs betätigt werden. Der Fahrer kann somit das Fahrzeug verlassen, um es auf der Wegstrecke zurückzubewegen.

In einer weiteren Ausführungsform kann durch eine Betätigung einer der Tasten 26, 27 das Fahrzeug auch zu dem Endpunkt nach vorne bzw. zu dem Endpunkt zurück bewegt werden. Es fährt dann selbständig die aufgezeichnete Wegstrecke entlang. Eine Fahrt des Fahrzeugs kann hierbei durch einen Druck auf die Drucktaste 8 stets sofort angehalten werden. In diesem Fall werden nur schematisch dargestellte Fahrzeugbremsen 30, bevorzugt an den Vorderrädern und den Hinterrädern, aktiviert und das Fahrzeug wird angehalten.

Das Fahrzeug kann wiederholt auf der nunmehr aufgezeichneten Wegstrecke, quasi entsprechend einer virtuellen Schiene, in beide Richtungen entlang geführt werden. Hierbei kann die gespeicherte Wegstrecke vollständig zwischen Anfangspunkt und Endpunkt befahren werden. Es ist aber auch möglich, jeweils in beide Richtungen, beliebige Teilstücke zu befahren. So kann das Fahrzeug z.B. auf gleiche Weise, wie es eingeparkt worden ist, wieder aus der Parklücke ausgeparkt werden. Nachdem das Fahrzeug z.B. über eine Verriegelungstaste 31 erst verriegelt und nach einiger Zeit zum Weiterfahren wieder entriegelt wird, kann der Fahrzeugantrieb 28 ebenfalls über die Fernbedienung 5 aktiviert werden, um das Fahrzeug aus der Parklücke wieder herausfahren zu lassen, um ein bequemes Einsteigen zu ermöglichen. Um den Motor zu starten, ist bevorzugt ebenfalls eine entsprechende Drucktaste 32 an der Fernbedienung 5 vorgesehen. Bevorzugt startet der Motor jedoch erst dann, wenn diese Taste für einen vorgegebenen Zeitraum, in einer weiteren Ausführungsform sogar nur in Kombination mit einer weiteren Taste, z.B. der Drucktaste 8, gedrückt wurde, um ein versehentliches Motorstarten zu verhindern.

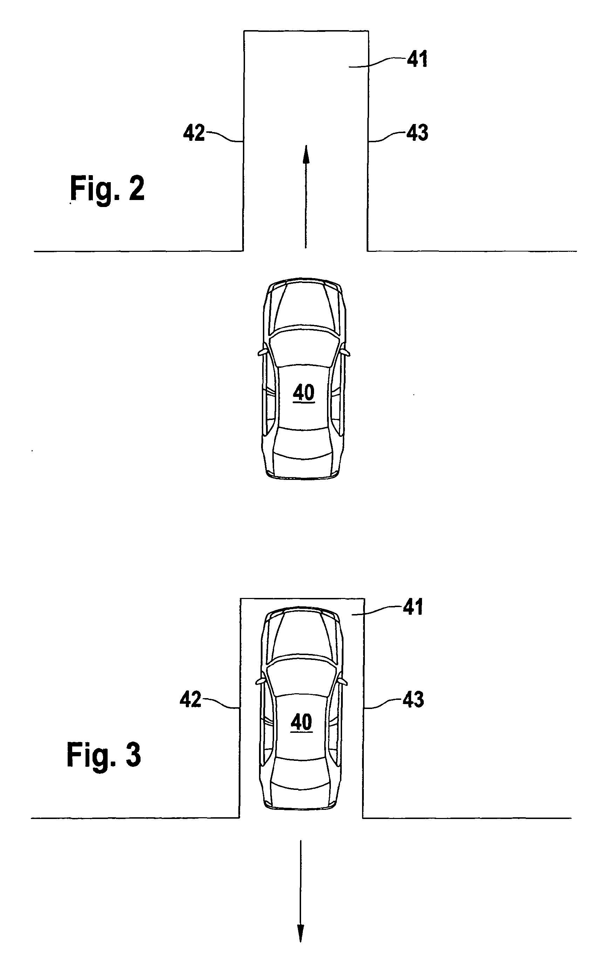

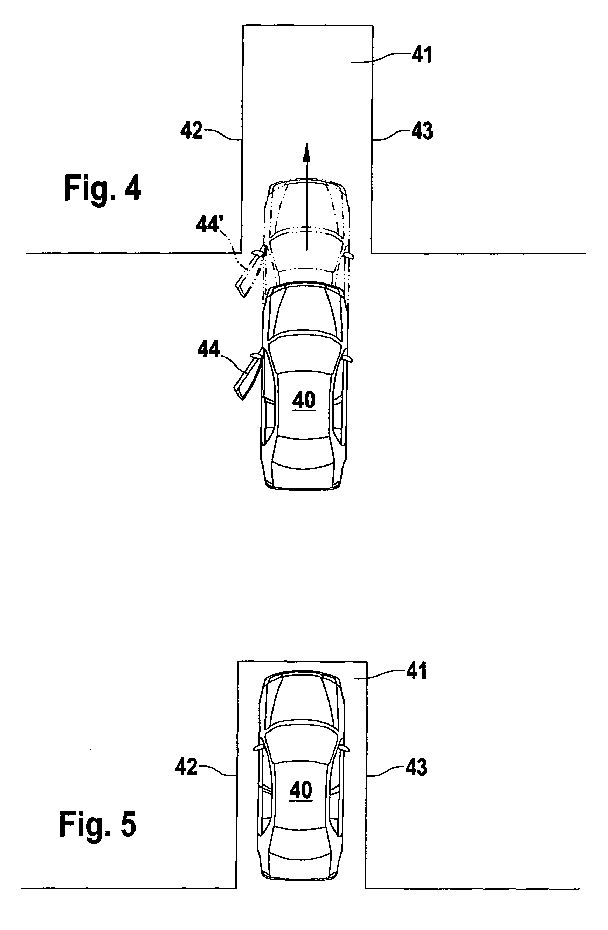

In den Figuren 2 bis 5 ist der Ablauf eines erfindungsgemäßen Verfahrens erläutert. Ein Fahrzeug 40 soll in einer Parklücke 41 eingeparkt werden, die durch relativ enge Begrenzungen 42, 43 so eingeschränkt ist, dass sich die Türen kaum oder zumindest für den Fahrer nicht hinreichend öffnen lassen. Begrenzungen 42, 43 können andere Fahrzeuge, Mauern oder Pfosten und Ähnliches sein. Die Parklücke 41 ist dabei in dem hier gezeigten Ausführungsbeispiel so gestaltet, dass das Fahrzeug vorwärts bzw. rückwärts in die Parklücke hineinfahren kann. In dem hier gezeigten Ausführungsbeispiel soll das Fahrzeug 40 vorwärts in die Parklücke 41 hineinfahren. Das Fahrzeug 40 wird so zunächst zum Hereinfahren vor der Parklücke 41 positioniert, wie es in der Figur 2 dargestellt ist. Anschließend fährt ein Fahrer selbsttätig in die Parklücke 41 hinein, wobei er gegebenenfalls durch die an der Vorderseite des Fahrzeugs angeordneten Abstandssensoren 23 unterstützt wird. In einem ersten Ausführungsbeispiel positioniert der Fahrer das Fahrzeug 40 selber in der Parklücke 41 und startet nun, nachdem er die gewünschte Parkposition erreicht hat, eine Aufzeichnung der Wegstrecke. Die Positionierung des geparkten Fahrzeugs ist in der Figur 3 dargestellt. Der Fahrer fährt nun das Fahrzeug selbständig wieder aus der Parklücke heraus. In einem geeigneten Abstand zu der Parklücke 41 hält er das Fahrzeug 40 an. Diese Situation ist in der Figur 4 gezeigt.

In der hier dargestellten Ausführungsform wird das Fahrzeug 40 vollständig aus der Parklücke wieder herausgefahren. In einer weiteren Ausführungsform kann sich das Herausfahren des Fahrzeugs jedoch auch darauf beschränken, dass eine Fahrzeugtüre 44 gerade geöffnet werden kann. Diese Situation ist gestrichelt dargestellt, wobei hier die geöffnete Türe mit dem Bezugszeichen 44' versehen ist. Die in der Figur 3 gezeigte Position des Fahrzeugs bezeichnet dabei den Anfangspunkt und die in der Figur 4 gezeigten Positionen des Fahrzeugs bezeichnen mögliche Endpunkte der aufgezeichneten Wegstrecke.

Der Fahrer steigt nun aus und startet mittels der Fernbedienung, z.B. durch ein Drücken der Taste 26, die Vorwärtsfahrt des Fahrzeugs. Das Fahrzeug wird nun in die Parklücke 41 wieder hereingeführt, so dass es auf der zuvor als Anfangspunkt der Wegstrecke festgelegten Parkposition in der Parklücke 41 stehen bleibt, wie es in der Figur 5 gezeigt ist. Der Fahrer kann nun den Antrieb 28 des Fahrzeugs abstellen und das Fahrzeug mittels der Verriegelungstaste 31 verriegeln. Möchte er aus der Parklücke 41 später wieder ausparken, so startet er den Motor mittels der Taste 32, entriegelt das Fahrzeug mittels der Taste 31 und bewegt das Fahrzeug zu der in der Figur 4 gezeigten Position vor der Parklücke zurück.

In einer zweiten Ausführungsform wird die Aufzeichnung der Wegstrecke bereits bei der in der Figur 2 gezeigten Position des Fahrzeugs 40 vor der Parklücke 41 begonnen. Der Fahrer fahrt das Fahrzeug in die Parklücke hinein und beendet die Aufzeichnung bei der Position des Fahrzeugs gemäß der Figur 3, bei der das Fahrzeug auf der Wunschposition abgestellt ist. In gleicher Weise wie bei der ersten Ausführungsform bewegt der Fahrer, der sich nun bevorzugt noch in dem Fahrzeug befindet, das Fahrzeug mittels der Fernbedienung 5 oder mittels einer anderen Bedieneinheit zurück, bis es eine der in der Figur 4 gezeigten Positionen erreicht. Bevorzugt wird die zuvor gespeicherte Anfangsposition gemäß der Figur 2 wieder eingenommen. Nun kann der Fahrer bequem aus dem Fahrzeug aussteigen und es anschließend mittels der Fernbedienung 5, die er nun bevorzugt aus dem Fahrzeug entnimmt, wieder in die Endposition zurückbewegen, die gewünschte Parkposition in der Parklücke 41. Damit ergibt sich die in der Figur 5 gezeigte Position des Fahrzeugs. Möchte er das Fahrzeug ausparken, so wird er in vergleichbarer Weise wie bei der ersten Ausführungsform zunächst den Motor starten und das Fahrzeug in eine gewünschte Position vor der Parklücke bewegen. Er kann nun ebenfalls in das Fahrzeug einsteigen und den Parkplatz verlassen.

## Patentansprüche

1. Parkhilfsvorrichtung für ein Fahrzeug (1), wobei die Parkhilfsvorrichtung eine Erfassungseinheit (2) zur Erfassung einer zurückgelegten Wegstrecke, einen Speicher (22) zum Speichern der zurückgelegten Wegstrecke und eine Ansteuereinheit (2, 25) für eine Fahrzeuglenkung beinhaltet wobei das Fahrzeug von der Ansteuereinheit (2) entlang der gespeicherten Wegstrecke ausgehend von einem Endpunkt der gespeicherten Wegstrecke automatisch zurückgeführt wird.

2. Parkhilfsvorrichtung nach Anspruch 1, **gekennzeichnet durch** eine insbesondere drahtlose Fernbedienung (5) des Fahrzeugs (1) zum Steuern des Zurückfahrens entlang der gespeicherten Wegstrecke.

3. Parkhilfsvorrichtung nach einem der vorherigen Ansprüche, **gekennzeichnet durch** eine Vorrichtung (2) für ein Begrenzen der Fahrzeuggeschwindigkeit während des automatischen Zurückführens des Fahrzeugs.

4. Parkhilfsvorrichtung nach einem der vorherigen Ansprüche, **dadurch gekennzeichnet, dass** die Ansteuereinheit (2) auf den Antrieb des Fahrzeugs derart zugreift, dass das Fahrzeug auf der gespeicherten Wegstrecke automatisch zurückgeführt wird.

5. Parkhilfsvorrichtung nach einem der vorherigen Ansprüche, **gekennzeichnet durch** eine Abstandsmessvorrichtung (23, 24) zur Messung des Abstands zu Hindernissen in der Fahrzeugumgebung.

6. Verfahren zur Parkunterstützung für ein Fahrzeug, wobei eine Wegstrecke während einer Fahrt des Fahrzeugs von einem Anfangspunkt zu einem Endpunkt aufgezeichnet wird und wobei im Anschluss daran das Fahrzeug entlang der aufgezeichneten Wegstrecke von dem Endpunkt in Richtung des Anfangspunkts automatisch zurückgeführt wird.

7. Verfahren nach Anspruch 6, **dadurch gekennzeichnet, dass** das Fahrzeug anschließend wieder zu dem Endpunkt geführt wird.

8. Verfahren nach einem der Ansprüche 6-7, **dadurch gekennzeichnet, dass** mittels einer Bedieneinheit außerhalb des Fahrzeugs eine Verzögerung und/oder eine Beschleunigung des Fahrzeugs ausgelöst werden.

9. Verfahren nach einem der Ansprüche 6-8, **dadurch gekennzeichnet, dass** eine Abstandsmessvorrichtung die Fahrzeugumgebung überwacht und dass bei einer Annäherung an ein Hindernis unterhalb eines vorgegebenen Abstands ein Warnung ausgegeben wird und/oder das Fahrzeug automatisch verzögert wird.

## Claims

1. Parking assistance device for a vehicle (1) wherein the parking assistance device contains a recording device (2) for recording a distance which has been travelled, a memory (22) for storing the distance which has been travelled and an actuation unit (2, 25) for a vehicle steering system, wherein the vehicle is automatically guided back along the stored distance starting from an end point of the stored distance by the actuation unit (2).

2. Parking assistance device according to Claim 1, **characterized by** an, in particular, wireless remote control system (5) of the vehicle (1) for controlling the guiding back along the stored distance.

3. Parking assistance device according to one of the preceding claims, **characterized by** a device (2) for limiting the velocity of the vehicle during the automatic guiding back of the vehicle.

4. Parking assistance device according to one of the preceding claims, **characterized in that** the actuation unit (2) accesses the drive of the vehicle in such a way that the vehicle is automatically guided back over the stored distance.

5. Parking assistance device according to one of the preceding claims, **characterized by** a distance-measuring device (23, 24) for measuring the distance from obstacles in the surroundings of the vehicle.

6. Parking assisting method for a vehicle, wherein during a journey by the vehicle a distance is recorded from a starting point to an end point, and wherein subsequently the vehicle is automatically guided back along the recorded distance from the end point in the direction of the starting point.

7. Method according to Claim 6, **characterized in that** the vehicle is subsequently guided back to the end point.

8. Method according to one of Claims 6-7, **characterized in that** deceleration and/or acceleration of the vehicle are triggered by means of the operator control unit outside the vehicle.

9. Method according to one of Claims 6-8, **characterized in that** a distance-measuring device monitors the surroundings of the vehicle and **in that** when an obstacle is approached to a distance which is less than a predefined distance a warning is issued and/or the vehicle is automatically decelerated.

## Revendications

1. Dispositif d'assistance au stationnement d'un véhicule (1), le dispositif d'assistance au stationnement présentant une unité de détection (2) qui détecte la trajectoire parcourue, une mémoire (22) qui conserve les trajectoires parcourues et une unité de commande (2, 25) de la direction du véhicule, le véhicule étant reculé automatiquement par une unité de commande (2) le long de la trajectoire conservée en mémoire depuis le point final de la trajectoire conservée en mémoire.

2. Dispositif d'assistance au stationnement selon la revendication 1, **caractérisé par** une commande à distance (5) du véhicule (1), en particulier sans fil, pour commander son recul le long de la trajectoire conservée en mémoire.

3. Dispositif d'assistance au stationnement selon l'une des revendications précédentes, **caractérisé par** un dispositif (2) qui limite la vitesse du véhicule pendant le recul automatique du véhicule.

4. Dispositif d'assistance au stationnement selon l'une des revendications précédentes, **caractérisé en ce que** l'unité de commande (2) agit sur l'entraînement du véhicule de telle sorte que le véhicule soit reculé automatiquement sur la trajectoire conservée en mémoire.

5. Dispositif d'assistance au stationnement selon l'une des revendications précédentes, **caractérisé par** un dispositif (23, 24) de mesure de distance qui mesure la distance par rapport à des obstacles présents dans l'environnement du véhicule.

6. Procédé d'assistance au stationnement d'un véhicule, dans lequel une trajectoire est affichée pendant un déplacement du véhicule depuis un point initial jusqu'à un point final, suite à quoi le véhicule est guidé automatiquement de son point final à son point initial le long de la trajectoire affichée.

7. Procédé selon la revendication 6, **caractérisé en ce que** le véhicule est ensuite amené au point final.

8. Procédé selon l'une des revendications 6 à 7, **caractérisé en ce qu'**un ralentissement et/ou une accélération du véhicule sont déclenchés au moyen d'une unité d'actionnement située à l'extérieur du véhicule.

9. Procédé selon l'une des revendications 6 à 8, **caractérisé en ce qu'**un dispositif de mesure de distance surveille l'environnement du véhicule et **en ce que** lorsque le véhicule s'approche d'un obstacle de moins qu'une distance prédéterminée, un avertissement est émis et/ou le véhicule est ralenti automatiquement.
